# FASCICULE DE BREVET EUROPEEN

(11) **EP 3 262 477 B1**
(45) Date de publication et mention de la délivrance du brevet: **01.07.2020**
(21) Numéro de dépôt: 16707676.9
(22) Date de dépôt: 22.02.2016
(51) Int. Cl.: G05D 23/19, F25B 21/02, A47G 19/12

(54) **DISPOSITIF POUR LA RÉGULATION DE TEMPÉRATURE**
TEMPERATURREGELUNGSVORRICHTUNG
TEMPERATURE CONTROL DEVICE

(30) Priorité: 23.02.2015 FR 1551519
(43) Date de publication de la demande: 03.01.2018
(73) Titulaire: SAS LACARAF, 31400 Toulouse (FR)
(72) Inventeur: BOULE, Anthony, 31400 Toulouse (FR); LAPALUS, Pierre, 13013 Marseille (FR)
(74) Mandataire: Brevalex
(86) Numéro de dépôt international: PCT/EP2016/053683
(87) Numéro de publication internationale: WO 2016/135104

(56) Documents cités:
- WO-A1-2006/086618
- GB-A- 2 501 223
- US-A- 5 115 859
- US-A- 5 761 909
- US-A1- 2002 162 339
- US-A1- 2007 193 278
- US-A1- 2014 305 927

## Description

### DOMAINE TECHNIQUE

L'invention concerne la régulation de température. Plus particulièrement, l'invention concerne un dispositif et un procédé pour réguler la température d'un élément.

### ÉTAT DE LA TECHNIQUE ANTÉRIEURE

De nombreux moyens existent pour réguler la température comprenant par exemple des cycles à compression de vapeur, des chaudières, des réactions chimiques, et des moyens à effet thermoélectrique.

En particulier, l'effet thermoélectrique (ou effet Peltier) est la conversion directe d'une différence de températures entre deux côtés d'un conducteur en une tension électrique et vice versa. L'utilisation de cette technologie pour réguler la température a pris son envol au cours des dernières années, grâce au fait qu'un module thermoélectrique ne comporte pas de parties mobiles, nécessite peu d'entretien et présente une longue durée de vie. Par ailleurs, il ne comporte pas de fluides de transfert de chaleur, tels que les réfrigérants. En outre, un module thermoélectrique peut être de très petite taille, ce qui est idéal pour l'utiliser dans un espace de volume limité et pour la portabilité. Un module thermoélectrique permet également un contrôle précis de la température en ajustant de manière simple sa tension d'alimentation.

Un exemple d'utilisation d'un module thermoélectrique pour réguler la température est décrit dans la demande de brevet publiée FR 2 961080 A1 (de la demanderesse). Ce document décrit un dispositif comportant un décanteur à vin et plusieurs modules à effet Peltier (effet thermoélectrique) agencés au décanteur. La température d'un liquide contenu dans le décanteur peut être régulée grâce à un calculateur qui contrôle la tension aux bornes des modules à effet Peltier afin de réchauffer ou refroidir le liquide.

D'autres exemples de modules thermoélectriques utilisés en particulier pour le refroidissement sont décrits dans la demande de brevet US 2002/0162339 A1 et dans la demande de brevet GB 2501223 A.

La demande de brevet US 2014/0305927 A1 divulgue un conteneur équipé d'un dispositif pour réguler la température d'un élément à l'aide de composants chauffants ou refroidissants pouvant être des modules thermoélectriques.

Les exemples ci-dessus souffrent toutefois d'un manque d'efficacité puisque leurs modules thermoélectriques, fonctionnant en absorbant ou en rejetant de l'énergie thermique à leur environnement, dépendent de l'absorption ou de la perte d'énergie à leur environnement, et sont donc tributaires de la température ambiante qui souvent ne fournit pas une température différentielle suffisante, et qui est par ailleurs sujette aux fluctuations.

### EXPOSÉ DE L'INVENTION

L'objet de la présente invention est par conséquent de remédier aux besoins et inconvénients précités en proposant un dispositif et un procédé de régulation de la température efficaces et simples à utiliser.

La présente invention propose ainsi un dispositif portable pour réguler la température d'un élément, ledit dispositif comprenant :
i) une partie d'engagement apte à être mise en contact avec l'élément, ladite partie d'engagement comprenant une carafe pour la décantation et l'aération d'un liquide ;
ii) une unité de régulation de température comprenant un module thermoélectrique ayant deux côtés,
un premier côté dudit module thermoélectrique étant thermiquement couplé avec la partie d'engagement,
le dispositif étant original en ce qu'il comprend en outre :
iii) une partie de réception adaptée à recevoir, d'une manière amovible, un matériau à changement de phase (MCP),
un deuxième côté dudit module thermoélectrique étant thermiquement couplé avec la partie de réception, de telle sorte qu'un matériau à changement de phase (MCP) fourni dans ladite partie de réception soit aussi thermiquement couplé avec le deuxième côté dudit module thermoélectrique.

Par « réguler la température d'un élément », il est entendu que le dispositif est capable de maintenir la température de l'élément sensiblement constante et égale à une température de consigne (à une marge de tolérance près). Typiquement, cette température de consigne est sélectionnée, directement ou indirectement, par l'utilisateur.

Le dispositif peut en outre comprendre une ou plusieurs des caractéristiques suivantes prises séparément ou selon toute combinaison techniquement admissible.

De préférence la partie d'engagement comprend une plaque caloporteuse.

La carafe peut être une carafe en une seule pièce, ou une carafe comportant une cloche démontable et un fond, ledit fond étant une plaque caloporteuse.

De préférence, la partie d'engagement, l'unité de régulation de température et la partie de réception sont solidaires du dispositif.

De préférence encore, le dispositif entier est adapté pour s'incliner pour verser un liquide depuis le dispositif.

De préférence, la partie de réception comporte un matériau à changement de phase (MCP) d'une masse prédéterminée. De préférence encore, ledit matériau à changement de phase (MCP) est compris dans un conteneur amovible.

Préférablement, le matériau à changement de phase (MCP) est un matériau choisi parmi les matériaux suivants : eau, paraffine, hydrates de sel, glace sèche (dioxyde de carbone), orthophosphate disodique dodécahydraté, cire, ou une combinaison quelconque de deux ou plusieurs matériaux. Avantageusement, pendant l'usage, l'énergie thermique fournie à ou extraite de l'élément par le module thermoélectrique est essentiellement extraite de ou fournie respectivement au matériau à changement de phase (MCP).

De façon préférée, l'unité de régulation de température comprend un module thermoélectrique de type à effet Peltier.

De préférence encore, le module est commandé par un calculateur en fonction d'une température sélectionnée. Avantageusement, le module est commandé, en outre, par le calculateur en fonction d'une période temporelle recommandée.

De façon préférée, la température pour un vin est sélectionnée selon un type de vin sélectionné, le calculateur recevant une température d'une base de données liée au calculateur en fonction du type de vin sélectionné, et aussi une période d'aération recommandée pour ledit type de vin.

La présente invention propose aussi un procédé pour réguler la température d'un élément utilisant un dispositif portable pour réguler la température d'un élément tel que défini précédemment, dans lequel le procédé comprend les étapes suivantes :
i) coupler thermiquement un premier côté d'un module thermoélectrique présentant un premier effet thermique avec l'élément,
ii) fournir, d'une manière amovible, un matériau à changement de phase (MCP) d'une masse prédéterminée,
iii) coupler thermiquement un deuxième côté dudit module thermoélectrique
   présentant un deuxième effet avec le matériau à changement de phase (MCP), tel que l'énergie fournie à ou extraite de l'élément est extraite de ou fournie à la chaleur latente du matériau à changement de phase (MCP), de sorte que le matériau à changement de phase (MCP) subit, au moins en partie, un changement de phase.

### BRÈVE DESCRIPTION DES DESSINS

Il est décrit par la suite, à titre d'exemples non limitatifs, des modes de réalisation de l'invention, en se référant aux dessins annexés, dans lesquels :
la figure 1 illustre de manière schématique un dispositif portable pour réguler la température d'un élément ;
la figure 2 présente une vue en coupe verticale d'un dispositif selon un mode de réalisation de l'invention ;
la figure 3 présente une vue en coupe horizontale d'un dispositif selon un mode de réalisation de l'invention .

Dans toutes ces figures, des références identiques peuvent désigner des éléments identiques ou similaires. En outre, les différentes parties représentées sur les figures ne sont pas nécessairement selon une échelle uniforme, pour rendre les figures plus lisibles.

### EXPOSÉ DÉTAILLÉ DE MODES DE RÉALISATION PARTICULIERS

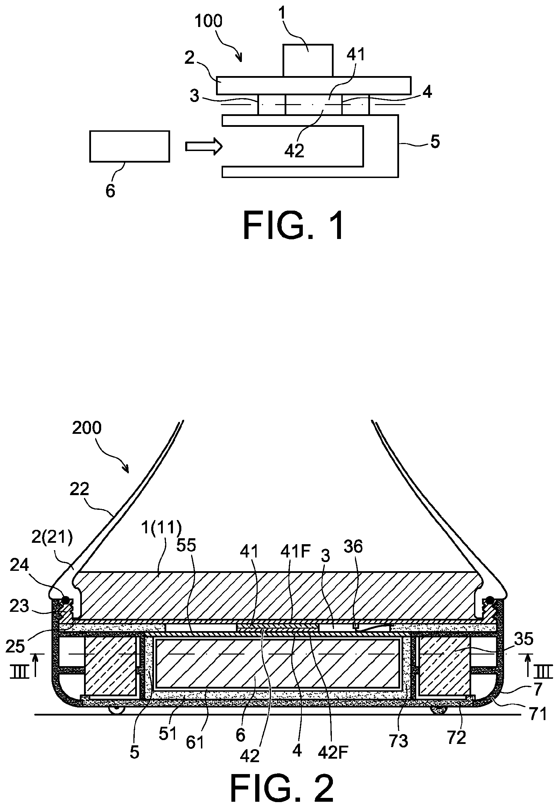

La figure 1 illustre de manière schématique un dispositif 100 portable pour réguler la température d'un élément 1. Il comprend une partie 2 d'engagement adaptée à être mise en contact avec l'élément 1. La partie 2 d'engagement est nommée ainsi car elle est adaptée pour être engagée sur l'élément 1. La partie d'engagement comprend une carafe pour la décantation et l'aération d'un liquide.

Le dispositif 100 possède également une unité 3 de régulation de température comprenant un module thermoélectrique 4, le module thermoélectrique 4 ayant deux côtés 41, 42. Un premier côté 41 est en contact thermique avec la partie 2 d'engagement et un deuxième côté 42 est en contact thermique avec une partie 5 de réception. L'unité 3 de régulation de température comprend préférablement, en plus, les composants qui permettent au module thermoélectrique 4 de fonctionner et d'être contrôlé, tels qu'un calculateur, une mémoire, un capteur et des batteries d'accumulateurs.

La partie 5 de réception est adaptée à recevoir, de manière amovible, une masse de matériau à changement de phase (MCP) 6. Comme la partie 5 de réception est en contact thermique avec le module thermoélectrique 4, un MCP 6 placé dans cette partie 5 sera également couplé thermiquement au module thermoélectrique 4. De plus amples détails, ainsi que d'autres caractéristiques préférentielles, sont décrits par la suite en référence aux modes de réalisation préférés.

Le dispositif pour la régulation de température de l'invention va maintenant être décrit par rapport à l'un des modes de réalisation préférés.

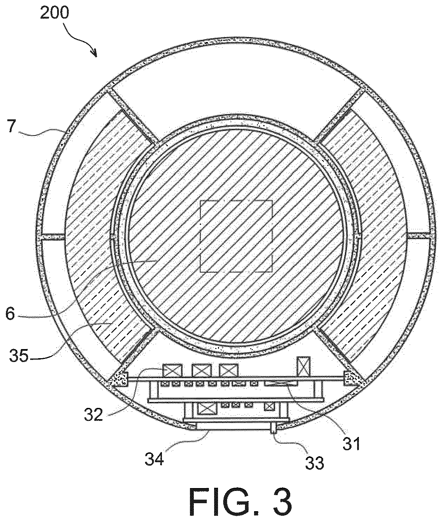

Les figures 2 et 3 montrent un dispositif 200 de carafe à vin à régulation de température destiné à réchauffer et refroidir un volume de vin 11 selon un mode de réalisation. Le dispositif 200 est portable, dispose d'un approvisionnement en énergie autonome et est destiné à une utilisation au cours d'un service à table.

Le dispositif 200 comporte une unité 3 de régulation de température comprenant un module thermoélectrique 4, et une partie 5 de réception adaptée à recevoir un MCP 6. Il dispose également d'une partie 2 d'engagement adaptée pour l'engagement d'un élément 1 nécessitant une régulation de température.

La partie 2 d'engagement correspond à une carafe 21, qui est un conteneur spécialement adapté à la décantation et l'aération d'un volume de liquide, par exemple du vin.

La carafe 21 est composée de deux parties. La première partie est une cloche 22 sans fond, en verre ou en cristal, et la deuxième partie est un fond 23 qui est une plaque caloporteuse 25 en un matériau ayant une bonne conductivité thermique, par exemple en acier inoxydable ou en aluminium alimentaire. La cloche 22 et le fond 23 possèdent des moyens de filetage complémentaires leur permettant d'être fixés l'un à l'autre. Un joint torique 24 est disposé à leur interface pour fournir une connexion étanche entre les deux. La carafe 21 est conçue pour être démontable permettant ainsi de faciliter son nettoyage.

L'unité 3 de régulation de température, comprenant le module thermoélectrique 4, est disposée en-dessous de la partie 2 d'engagement. Elle comprend en outre un calculateur 31 pour commander le module thermoélectrique 4, une mémoire 32 dans laquelle les paramètres ou les informations requis pour le fonctionnement du dispositif 200 sont stockés, un moyen d'entrée 33 pour sélectionner la température et un afficheur 34.

Le dispositif 200 comporte également une source de tension 35, par exemple des batteries, pour alimenter l'unité 3 de régulation de température. Un boîtier 7 contient la plupart de ces composants de la carafe à vin 200 à régulation de température. Le boîtier 7 est conçu avec des moyens de filetage complémentaires de ceux situés sur le fond 23 afin de permettre leur assemblage. La partie 5 de réception, adaptée à recevoir un MCP 6, est disposée en dessous du module thermoélectrique 4. Une masse de MCP 6 est également présente, ce qui sera discuté plus en détails par la suite.

Le module thermoélectrique 4 fonctionne selon l'effet Peltier. Il a deux côtés principaux, un côté supérieur 41 (premier côté) avec une face supérieure 41F et un côté inférieur 42 (deuxième côté) avec une face inférieure 42F. Lorsque le module 4 est alimenté par une tension électrique, il génère entre le côté supérieur 41 et le côté inférieur 42, d'une part une différence de température, et d'autre part un flux de chaleur. Le module 4 présente donc un premier effet thermique sur le côté supérieur 41 (notamment sur la face supérieure 41F), et un deuxième effet thermique sur le côté inférieur 42F (notamment sur la face inférieure 42F). Par ailleurs, si la tension aux bornes du module thermoélectrique 4 est inversée, les effets thermiques présentés sur les deux côtés (ou faces) seront inversés.

Pendant l'utilisation, la différence de température et le flux de chaleur sont essentiellement dépendants de la tension d'alimentation du module thermoélectrique 4, de la température du MCP 6 et de la température de l'élément 1 (le vin 11). Comme les couplages thermiques entre l'élément 1 et la face supérieure 41F du module thermoélectrique 4 et entre la face inférieure 42F du module thermoélectrique 4 et le MCP 6 sont excellents, les températures des faces 41F, 42F du module thermoélectrique 4 sont quasi-imposées à un instant donné, et une modification de la tension électrique d'alimentation du module thermoélectrique 4 fait essentiellement varier le flux de chaleur extrait de ou fourni à l'élément 1.

Le côté supérieur 41 du module thermoélectrique est disposé de telle sorte qu'il est en contact thermique avec la carafe. En particulier, il est situé de manière à ce que sa face supérieure 41F soit en contact thermique avec le fond 23 de la carafe 21.

Le module thermoélectrique 4 fonctionne sous le contrôle du calculateur 31. Le calculateur 31 commande ainsi la tension aux bornes du module thermoélectrique 4 en fonction de la température sélectionnée et de la température mesurée par un capteur 36 de température, destiné à mesurer la température du liquide 1. Le capteur 36 de température, ou éventuellement un autre capteur, peut en outre être utilisé pour détecter la présence du liquide dans la carafe 21. Ainsi, le calculateur 31 commande le module thermoélectrique pour que la température sélectionnée soit atteinte par le vin 11.

Le choix de la température est effectué en utilisant des boutons 33 sur un clavier. L'afficheur 34 indique la température sélectionnée, ainsi que la température courante du vin 11. D'autres configurations de moyens d'entrée pour la sélection de la température peuvent être envisagées. Par exemple, un bouton rotatif peut être prévu pour sélectionner la température. En variante, un écran tactile permettant la sélection de la température avec plus de précisions peut être utilisé, avec d'autres informations, telles que le temps d'aération, pouvant aussi être sélectionnées.

Selon la température choisie, le calculateur 31 est adapté pour inverser la polarité de la tension aux bornes du module thermoélectrique de sorte que les effets thermiques présents sur les premier et deuxième côtés 41, 42 soient inversés. En d'autres termes, un même côté du module, au lieu de refroidir le vin, va le réchauffer. Bien entendu, plusieurs modules peuvent être prévus. Il est également possible de fournir un premier ensemble de modules dédié à réchauffer et un second ensemble dédié à refroidir.

Un évidement 51 est prévu dans la base 71 du dispositif pour la réception d'une masse de MCP 6. L'accès de l'évidement peut être fermé par un capot 72. Le capot 72 est connecté à la base 71 du boîtier 7 du dispositif par une connexion du type à baïonnette, bien que toute autre connexion permettant le détachement et l'enlèvement ou le remplacement facile et rapide du MCP 6 puisse être utilisée.

Le dispositif 200 comporte une masse prédéterminée de MCP 6. Un MCP est un matériau à changement de phase qui utilise sa chaleur latente de fusion ou de vaporisation pour absorber ou fournir de la chaleur. Le MCP 6 est disposé dans la partie 5 de réception qui est en contact thermique avec le côté inférieur 42 du module thermoélectrique 4. Le MCP 6 est donc aussi en contact thermique avec le module 4. Bien entendu, une plaque 55 de conduction de chaleur peut être interposée de manière à répartir le transfert d'énergie thermique entre le MCP 6 et le module thermoélectrique 4 de façon plus uniforme.

Le choix de MCP 6 dépendra de l'application particulière et de l'élément 1 dont la température doit être ajustée. A titre d'exemple, le MCP 6 peut être choisi parmi les matériaux suivants : paraffine, orthophosphate disodique dodécahydraté, hydrates de sel, eau, glace sèche (CO₂) ou cire. Une combinaison de ces matériaux peut également convenir. La quantité, ou la masse, de MCP 6 est idéalement comprise dans un conteneur 61 étanche de manière à empêcher le débordement quand elle est en phase liquide, et pour éviter tout contact direct lors de sa manipulation. Le conteneur 61 est en un matériau ayant une bonne conductivité thermique et n'empêche pas le transfert d'énergie thermique vers et depuis le MCP 6, et forme effectivement un « bloc de MCP » compact.

La carafe à vin 200 pour la régulation de température sera tout d'abord discutée en relation avec le refroidissement d'un volume de vin 11.

Un volume de vin blanc 11 à 15 °C est versé dans le dispositif. L'utilisateur souhaite le consommer à une température recommandée de 8 °C, et sélectionne ainsi cette température en appuyant par exemple sur un bouton 33 jusqu'à ce que la température désirée s'affiche. Le capteur 36 de température sur la base 71 du dispositif 200 détecte la température du liquide dans la carafe 21, par exemple par détection de la température du fond 23 de la carafe 21. Le capteur 36 est relié au calculateur 31 du dispositif et indique que le liquide 11 n'est pas à 8 °C, et donc doit être refroidi.

Alors, le dispositif 200 commence à refroidir le volume de vin 11. En particulier, le module thermoélectrique 4 présente un effet de refroidissement sur le côté supérieur 41 qui est en contact avec le fond 23 de la carafe, tandis que le côté inférieur 42 présente, par conséquent, un effet de réchauffage. Le module thermoélectrique 4 de l'unité 3 de régulation de température pompe alors l'énergie thermique du vin 11 vers le MCP 6.

Le bloc de MCP 6 est situé à l'intérieur de la partie 5 de réception, qui est l'évidement 51 sur la base 7 du dispositif 200. Le MCP 6, qui dans ce cas est de la glace d'eau, a été préalablement refroidi dans un congélateur domestique standard, et est gelé avec une température sous son point de fusion de 0 °C, par exemple égale à -5 °C. Le MCP 6 commence alors à absorber l'énergie thermique depuis le côté chaud 42 du module thermoélectrique, laquelle énergie vient du vin 11 et le vin 11 commence donc à refroidir. Le capteur 36 de température surveille la température du vin. Le dispositif 200 régule la température du vin 11 à partir de la température mesurée par le capteur 36 et de la température sélectionnée. En fonction de l'écart entre la température de l'élément mesurée et la température sélectionnée, le calculateur 31 détermine la commande à appliquer au module thermoélectrique 4.

Au fur et à mesure que le MCP 6 absorbe la chaleur, sa température augmente, jusqu'à atteindre la température de fusion du MCP de 0 °C. Le flux de chaleur transféré depuis le vin 11 vers le MCP 6 au travers du module thermoélectrique 4 fait ensuite progressivement fondre la glace et le mélange d'eau et de glace reste à sa température de fusion de 0 °C (jusqu'à ce que la totalité de sa masse soit devenue liquide).

Une fois atteinte la température sélectionnée du vin de 8 °C, lequel événement sera détecté par le capteur 36 de température, le calculateur 31 réduit le refroidissement de façon significative afin de ne pas trop refroidir le vin 11. Le dispositif 200 émet alors un signal sonore et/ou un signal visuel pour indiquer que le vin est à la température choisie et prêt à la consommation. L'utilisateur peut alors lever et incliner le dispositif 200 entier afin de verser une portion de vin 11 dans un verre.

Comme le vin est peu susceptible d'être consommé tout à la fois, le dispositif 200 est programmé pour maintenir le vin 11 à la température choisie, pour une période prédéterminée, par exemple 1 heure, ou jusqu'à ce que tout le vin 11 soit consommé. En conséquence, la température du vin 11 sera maintenue à la température idéale de consommation pour la durée approximative d'un repas.

Selon le type et la composition du MCP 6, il peut être capable d'absorber une grande quantité de chaleur correspondant au moins à sa chaleur latente de fusion. Alors le MCP 6, qui sert effectivement de dissipateur de chaleur pour le module thermoélectrique, reste à une température constante, égale à 0 °C parce que le MCP 6 est de la glace dans cet exemple, jusqu'à ce que toute la glace soit fondue. Au-delà, la température du MCP 6 commencera à augmenter à nouveau. En conséquence, si le dispositif 200 a été laissé pour refroidir le vin 11 pour une longue période, la glace 6 sera finalement complètement fondue.

Avantageusement, le dispositif comporte des capteurs pour mesurer la température du MCP 6, ou pour identifier que ce dernier est déjà « utilisé », afin de savoir si le MCP 6 doit être remplacé.

Une fois que tout le vin 11 a été consommé, ou lorsque le MCP 6 est complètement fondu, le bloc de MCP 6 peut être retiré et simplement placé dans le congélateur pour être solidifié à nouveau.

Avantageusement, la carafe 21, l'unité 3 de régulation de température et la partie 5 de réception du MCP 6 sont rassemblées en une seule unité bien qu'elle soit composée de plusieurs parties. Le dispositif 200 est conçu de telle sorte que la masse de MCP 6, placée dans la section de réception du dispositif 200, forme essentiellement une seule unité avec le reste du dispositif. La conception du dispositif en une seule unité est préférable, en particulier dans le mode de réalisation d'une carafe à vin à régulation de température où elle doit être inclinée. Bien entendu, d'autres modes de réalisation peuvent également exister, tels que par exemple un mode où le dispositif comporte une carafe d'une seule pièce en verre adaptée pour être séparable du reste du dispositif pour permettre la décantation, ou lorsque le dispositif est fait d'une seule unité mais conçu pour être enlevé du bloc de MCP au moment de verser le vin, et replacé sur le bloc pour continuer la régulation de température.

La carafe à vin 200 à régulation de température va maintenant être discutée en relation avec le réchauffage d'un volume de vin 11.

Cette fois, le MCP 6 a un point de fusion supérieur à la température souhaitée du vin 11. Une cire, par exemple, qui se solidifie à 40 °C, est ainsi choisie comme MCP 6. Comme avant, le MCP 6 est fourni dans un conteneur 61. Le bloc de cire est immergé dans un bain d'eau chaude de sorte que la cire fonde dedans complètement et sa température est supérieure à 40 °C, par exemple à 50 °C. Ce bloc est alors situé dans la partie 5 de réception du dispositif 200 et sécurisé. Il est situé dans un espace avec une isolation 73 de telle sorte que seulement la face supérieure soit exposée, et en contact thermique avec le module thermoélectrique 4.

Un vin rouge 11 à 10 °C, que l'utilisateur veut réchauffer à une température recommandée de 18 °C, est versé dans la carafe. Le dispositif 200 détecte la présence d'un liquide 11 et la température du liquide 11, et est maintenant prêt à être mis en route. L'utilisateur sélectionne la température de 18 °C. De plus, comme il s'agit d'un vin rouge, l'utilisateur entre un temps d'aération recommandé d'une heure dans le dispositif.

L'énergie thermique du MCP 6 est pompée vers le vin 11 par le module thermoélectrique 4. La température de la cire 6 dans le bloc va diminuer, jusqu'à ce qu'elle atteigne 40 °C, température qui se maintiendra. Il continue à fournir de l'énergie vers le module thermoélectrique 4 de telle sorte que la température du vin 11 augmente et atteigne la température sélectionnée de 18 °C. Une partie de l'énergie fournie par les batteries 35 pour faire fonctionner le module thermoélectrique peut également contribuer à l'échauffement du vin 11. Il peut aussi y avoir un transfert d'énergie entre le MCP 6 et le vin qui contourne le module thermoélectrique 4.

Le chauffage est réalisé en une heure pour amener la température du vin 11 au niveau recommandé. Ce chauffage progressif empêche le vin 11 de subir un « choc » par le réchauffage, ce qui est particulièrement important pour les vins rouges haut de gamme. Comme avant, le dispositif 200 émet un signal sonore et/ou un signal visuel lorsque la température désirée est atteinte. L'utilisateur peut maintenant consommer le vin 11 à la température recommandée pour la consommation, celui-ci étant aussi suffisamment aéré. L'utilisateur lève le dispositif 200 entier et l'incline afin de verser du vin 11 dans un verre.

Quand tout le vin 11 est consommé, ou quand le dispositif montre que le MCP 6 est « utilisé », c'est-à-dire gelé et à l'état solide, le bloc de MCP 6 est enlevé et mis dans un bain d'eau ou sur un radiateur pour être refondu. Entre-temps, un autre bloc « non-utilisé » peut être placé dans la partie 5 de réception si nécessaire. Avec le bon choix de MCP 6, et de la masse de celui-ci, le dispositif 200 est capable de réguler la température sans avoir besoin de remplacer le MCP 6 à mi-chemin au cours du processus ou en service. Eventuellement, le MCP 6 peut même être capable de fournir une régulation de température à plusieurs reprises, permettant par exemple plusieurs services successifs dans la restauration sans remplacement du MCP 6.

Il convient de noter que c'est le maintien prolongé à une température constante du MCP 6 (celle de son point de fusion ou de vaporisation) qui est important pour le fonctionnement du dispositif. Le MCP peut donc avoir un point de fusion entre -20 °C et 40 °C, à titre d'exemple, de 0 °C, 6 °C, 15 °C, 23 °C ou 40 °C, choisi en fonction de la nature de l'élément et si l'élément doit être réchauffé ou refroidi. Par ailleurs, il n'est pas essentiel que le point de fusion du MCP soit supérieur à la température désirée d'un élément à réchauffer. Un MCP avec un point de fusion qui est entre la température de départ, c'est-à-dire avant la régulation, et la température désirée d'un élément peut également convenir. Dans l'exemple où le vin rouge est réchauffé, un MCP avec un point de fusion de 15 °C peut aussi être approprié.

Il convient de noter que, dans les modes de réalisation décrits ci-dessus, il y a très peu de transfert d'énergie entre le dispositif 200 et l'environnement ambiant. C'est-à-dire qu'en régulant la température d'un élément 11, la chaleur absorbée de l'élément à refroidir sera principalement stockée dans le dispositif 200, tandis que la chaleur perdue à l'élément 11 à réchauffer provient également essentiellement de l'intérieur du dispositif 200. Quand un volume de vin 11 est refroidi par le dispositif 200 sur un stand de buffet, la chaleur résultant du refroidissement du vin 11 ne sera pas rejetée à l'extérieur où elle pourrait endommager d'autres produits alimentaires. En ce sens, le dispositif 200 est autonome et ne dépend pas ou ne « perturbe » pas l'environnement, contrairement aux nombreux autres dispositifs de régulation de température. Il n'a pas non plus besoin d'utiliser un ventilateur pour créer un flux d'air pour évacuer efficacement l'énergie du côté 42 du module thermoélectrique 4, et est donc très silencieux. Cela le rend très adapté pour des tables, des stands de buffet, des chambres d'hôpital, et les endroits sensibles au bruit. A noter également que le dispositif 200 n'a pas besoin d'être raccordé au réseau d'alimentation pendant son fonctionnement, et est donc plus sécurisé et adapté à tous types d'environnements où le liquide peut être à l'origine d'éclaboussures sur le dispositif.

D'autres aspects avantageux peuvent également être incorporés au dispositif selon la présente invention. Par exemple, l'écran d'affichage 34, en plus d'indiquer la température du vin et la température sélectionnée, peut en outre être configuré pour afficher utilement d'autres informations telles que la durée de vie de la batterie, le statut du MCP, le temps de régulation de température ou d'aération restant.

Dans un autre mode de réalisation, au lieu de choisir une température désirée, un utilisateur peut sélectionner un type de vin, par exemple, du type Bordeaux (rouge). Lorsque cette instruction est reçue, le calculateur 31 va contrôler le module thermoélectrique, et une température désignée pour ce type de vin peut être choisie, par exemple de 18 °C, à partir de la mémoire 32 du dispositif. En variante, au lieu de sélectionner une catégorie ou un type général de vin, les instructions de régulation de température pour le type exact de vin, année, région, entre autres, peuvent être sélectionnées. Par exemple, les détails du vin peuvent être scannés depuis un téléphone portable du type Smartphone sur une bouteille de vin. Le Smartphone se connecte à une base de données en ligne, maintenue par le chef-de-cave du producteur de vin. Cette base de données contiendra des informations sur la température recommandée pour la consommation de ce vin particulier et en plus la durée d'aération idéale. Toutes les informations pertinentes seront téléchargées dans le Smartphone, et transmises au dispositif 200 à régulation de température. Ensuite, le dispositif 200 chauffera ou refroidira le vin automatiquement. Lorsque cela est fait, le dispositif 200 envoie une notification au Smartphone pour informer le propriétaire que le vin est prêt à être consommé (comme recommandé par les experts).

La présente invention se distingue en outre de l'art antérieur en ce qu'elle peut recevoir un MCP 6 d'une manière amovible ou remplaçable, une caractéristique liée étroitement à la façon dont le dispositif sera utilisé. Ceci permet de fournir ou d'absorber une quantité de chaleur beaucoup plus rapidement.

Dans d'autres variantes de l'invention, au lieu de fournir un bloc contenant le MCP, le MCP peut être fourni directement dans la partie de réception si elle est conçue de manière appropriée. Dans un autre mode de réalisation, le dispositif peut être pourvu d'un bloc de glace sèche, de dioxyde de carbone gelé. Lorsque la glace sèche absorbe l'énergie lors d'un processus de régulation de température de refroidissement, il se sublime et s'échappe du dispositif. Ceci, comme effet secondaire, peut fournir un bel effet esthétique agréable. Bien que le MCP ait été amovible au début, naturellement dans ce cas, le MCP ne sera plus amovible ou recouvrable après l'usage. Néanmoins davantage de MCP peut être ajouté.

De manière générale, le dispositif est typiquement envisagé avec un conteneur comme partie d'engagement. De préférence, ce conteneur sera amovible.

Il convient de noter que les expressions « contact thermique » et « thermiquement couplé » ne signifient pas nécessairement que les parties respectives sont physiquement en contact entre elles. Par exemple, une couche ou une plaque caloporteuse peut être interposée, et même une couche fine d'air peut exister entre les deux. Dans certains cas, un autre module thermoélectrique peut également être interposé entre les deux parties. Cependant, un système comportant un circuit de liquide de refroidissement pour transférer l'énergie entre les deux parties, ne peut pas être considéré en ce sens comme un contact thermique car le transfert d'énergie est très différent et indirect. Il sera apprécié que la face du module thermoélectrique puisse elle-même, dans certains cas, être adaptée pour l'engagement avec un élément.

Le terme « élément » peut correspondre à un solide, un liquide ou même un gaz. Bien entendu, la cloche démontable peut être réalisée en un matériau isolant, de manière à réduire la perte ou le gain d'énergie à travers la carafe.

Après que le dispositif ait été utilisé pour refroidir un élément, le MCP peut être complètement fondu et est donc « utilisé » pour cette application particulière. Toutefois, le dispositif peut alors être utilisé pour chauffer quelque chose, en prenant cette fois l'énergie du même MCP « utilisé » qui, pour cette nouvelle application sera « non-utilisé ». Aussi, une fois que le dispositif a effectué une régulation de température, il pourrait aussi fonctionner en sens inverse, simplement pour recongeler ou refondre le bloc, par exemple s'il n'y a pas de réfrigérateur disponible.

Les modes de réalisation décrits plus haut sont à titre d'exemples et ne doivent pas être interprétés de façon limitative. Il convient de noter que d'autres modes de réalisation ou améliorations à l'invention seront évidents pour l'homme du métier sans sortir du cadre des présentes revendications.

## Revendications

1. Dispositif (100 ; 200) portable pour réguler la température d'un élément (1), ledit dispositif comprenant :
i) une partie d'engagement (2) apte à être mise en contact avec l'élément (1), ladite partie d'engagement comprenant une carafe (21) pour la décantation et l'aération d'un liquide ;
ii) une unité (3) de régulation de température comprenant un module thermoélectrique (4) ayant deux côtés (41, 42),
un premier côté (41) dudit module thermoélectrique étant thermiquement couplé avec la partie (2) d'engagement,
**caractérisé en ce que** le dispositif (100 ; 200) comprend en outre :
iii) une partie (5) de réception adaptée à recevoir, d'une manière amovible, un matériau à changement de phase (MCP) (6),
un deuxième côté (42) dudit module thermoélectrique étant thermiquement couplé avec la partie (5) de réception, de telle sorte que le matériau à changement de phase (MCP) (6) fourni dans ladite partie de réception soit aussi thermiquement couplé avec le deuxième côté (42) dudit module thermoélectrique.

2. Dispositif selon la revendication 1, **caractérisé en ce que** la partie (2) d'engagement comprend une plaque caloporteuse (25).

3. Dispositif selon la revendication 1 ou 2, **caractérisé en ce que** la carafe est une carafe (21) comportant une cloche démontable (22) et un fond (23), ledit fond étant une plaque caloporteuse (25).

4. Dispositif selon l'une quelconque des revendications précédentes, **caractérisé en ce que** la partie (2) d'engagement, l'unité (3) de régulation de température et la partie (5) de réception sont solidaires du dispositif.

5. Dispositif selon la revendication 4, **caractérisé en ce que** le dispositif (200) entier est adapté pour s'incliner pour verser un liquide depuis le dispositif (200).

6. Dispositif selon l'une quelconque des revendications précédentes, **caractérisé en ce que** la partie (5) de réception comporte un matériau à changement de phase (MCP) (6) d'une masse prédéterminée.

7. Dispositif selon la revendication 6, **caractérisé en ce que** ledit matériau à changement de phase (MCP) (6) est compris dans un conteneur amovible (61).

8. Dispositif selon la revendication 7, **caractérisé en ce que** ledit matériau à changement de phase (MCP) (6) est un matériau choisi parmi les matériaux suivants : eau, paraffine, hydrates de sel, glace sèche (dioxyde de carbone), orthophosphate disodique dodécahydraté, cire, ou une combinaison quelconque de deux ou plusieurs de ces matériaux.

9. Dispositif selon l'une des revendications 6 à 8, **caractérisé en ce que** pendant l'usage, l'énergie thermique fournie à ou extraite de l'élément (1) par le module thermoélectrique est essentiellement extraite de ou fournie respectivement, au matériau à changement de phase (MCP) (6).

10. Dispositif selon l'une quelconque des revendications précédentes, **caractérisé en ce que** l'unité (3) de régulation de température comprend un module thermoélectrique (4) de type à effet Peltier.

11. Dispositif selon l'une quelconque des revendications précédentes, **caractérisé en ce que** le module (4) est commandé par un calculateur (31) en fonction d'une température sélectionnée.

12. Dispositif selon la revendication 11, **caractérisé en ce que** le module est commandé, en outre, par le calculateur (31) en fonction d'une période temporelle recommandée.

13. Dispositif selon la revendication 12, **caractérisé en ce que** la température pour un vin est sélectionnée selon un type de vin sélectionné, le calculateur (31) recevant une température d'une base de données liée au calculateur (31) en fonction du type de vin sélectionné, et aussi une période d'aération recommandée pour ledit type de vin.

14. Procédé pour réguler la température d'un élément (1) utilisant un dispositif portable (100 ; 200) pour réguler la température d'un élément selon l'une quelconque des revendications précédentes, dans lequel le procédé comprend les étapes suivantes :
i) coupler thermiquement un premier côté (41) d'un module thermoélectrique (4) présentant un premier effet thermique avec l'élément (1),
ii) fournir, d'une manière amovible, un matériau à changement de phase (MCP) (6) d'une masse prédéterminée,
iii) coupler thermiquement un deuxième côté (42) dudit module thermoélectrique (4) présentant un deuxième effet avec le matériau à changement de phase (MCP) (6),
tel que l'énergie fournie à ou extraite de l'élément (1) est extraite de ou fournie à la chaleur latente du matériau à changement de phase (MCP) (6), de sorte que le matériau à changement de phase (MCP) subit, au moins en partie, un changement de phase.

## Patentansprüche

1. Tragbare Vorrichtung (100; 200) zur Regelung der Temperatur eines Elements (1), wobei die Vorrichtung umfasst:
i) einen Eingriffsabschnitt (2), der mit dem Element (1) in Kontakt gebracht werden kann, wobei der Eingriffsabschnitt einen Dekanter (21) zum Absetzen und Belüften einer Flüssigkeit umfasst;
ii) eine Temperaturregelungseinheitt (3), die ein thermoelektrisches Modul (4) mit zwei Seiten (41, 42) umfasst,
wobei eine erste Seite (41) des thermoelektrischen Moduls thermisch mit dem Eingriffsabschnitt (2) gekoppelt ist,
**dadurch gekennzeichnet, dass** die Vorrichtung (100; 200) ferner umfasst:
iii) einen Aufnahmeteil (5), der zur entfernbaren Aufnahme eines Phasenwechselmaterials (PCM) (6) geeignet ist,
wobei eine zweite Seite (42) des thermoelektrischen Moduls thermisch mit dem Empfangsabschnitt (5) gekoppelt ist, so dass das in dem Empfangsabschnitt vorgesehene Phasenwechselmaterial (PCM) (6) ebenfalls thermisch mit der zweiten Seite (42) des thermoelektrischen Moduls gekoppelt ist.

2. Vorrichtung nach Anspruch 1, **dadurch gekennzeichnet, dass** der Eingriffsabschnitt (2) eine Wärmeübertragungsplatte (25) umfasst.

3. Vorrichtung nach Anspruch 1 oder 2, **dadurch gekennzeichnet, dass** der Dekanter ein Dekanter (21) mit einer abnehmbaren Glocke (22) und einem Boden (23) ist, wobei der Boden eine wärmeübertragende Platte (25) ist.

4. Vorrichtung nach einem der vorstehenden Ansprüche, **dadurch gekennzeichnet, dass** das Eingriffsteil (2), die Temperaturregelungseinheit (3) und das Aufnahmeteil (5) einstückig mit der Vorrichtung ausgebildet sind.

5. Vorrichtung nach Anspruch 4, **dadurch gekennzeichnet, dass** die gesamte Vorrichtung (200) geneigt werden kann, um eine Flüssigkeit aus der Vorrichtung (200) zu gießen.

6. Vorrichtung nach einem der vorhergehenden Ansprüche, **dadurch gekennzeichnet, dass** der Aufnahmeteil (5) ein Phasenwechselmaterial (PCM) (6) mit einer vorbestimmten Masse umfasst.

7. Vorrichtung nach Anspruch 6, **dadurch gekennzeichnet, dass** das Phasenwechselmaterial (PCM) (6) in einem abnehmbaren Behälter (61) enthalten ist.

8. Vorrichtung nach Anspruch 7, **dadurch gekennzeichnet, dass** das Phasenwechselmaterial (PCM) (6) ein Material ist, das aus den folgenden Materialien ausgewählt ist: Wasser, Paraffin, Salzhydrate, Trockeneis (Kohlendioxid), Dinatriumorthophosphat-Dodecahydrat, Wachs oder eine beliebige Kombination von zwei oder mehr dieser Materialien.

9. Vorrichtung nach einem der Ansprüche 6 bis 8, **dadurch gekennzeichnet, daß** im Gebrauch die dem Element (1) durch das thermoelektrische Modul zugeführte oder entzogene Wärmeenergie im wesentlichen aus dem Phasenwechselmaterial (PCM) (6) entzogen bzw. diesem zugeführt wird.

10. Vorrichtung nach einem der vorstehenden Ansprüche, **dadurch gekennzeichnet, dass** die Temperaturregelungseinheit (3) ein thermoelektrisches Modul (4) vom Peltier-Effekt-Typ umfasst.

11. Vorrichtung nach einem der vorstehenden Ansprüche, **dadurch gekennzeichnet, dass** das Modul (4) von einem Rechner (31) in Abhängigkeit von einer gewählten Temperatur gesteuert wird.

12. Vorrichtung nach Anspruch 11, **dadurch gekennzeichnet, dass** das Modul weiter durch den Computer (31) gemäß einer empfohlenen Zeitperiode gesteuert wird.

13. Vorrichtung nach Anspruch 12, **dadurch gekennzeichnet, dass** die Temperatur für einen Wein in Abhängigkeit von einer ausgewählten Weinsorte ausgewählt wird, wobei der Computer (31) eine Temperatur aus einer mit dem Computer (31) verbundenen Datenbank in Abhängigkeit von der ausgewählten Weinsorte und auch eine empfohlene Belüftungsdauer für diese Weinsorte erhält.

14. Verfahren zum Regulieren der Temperatur eines Elements (1) unter Verwendung einer tragbaren Vorrichtung (100; 200) zur Regulung der Temperatur eines Elements gemäß einem der vorstehenden Ansprüche, wobei das Verfahren die folgenden Schritte umfasst:
i) thermische Kopplung einer ersten Seite (41) eines thermoelektrischen Moduls (4), das einen ersten thermischen Effekt hat, mit dem Element (1),
(ii) Bereitstellung eines Phasenwechselmaterials (PCM) (6) mit einer vorgegebenen Masse auf entfernbare Weise,
iii) thermische Kopplung einer zweiten Seite (42) des thermoelektrischen Moduls (4), die eine zweite Wirkung hat, mit dem Phasenwechselmaterial (PCM) (6),
so dass Energie, die dem Element (1) zugeführt oder entzogen wird, der latenten Wärme des Phasenwechselmaterials (PCM) (6) entzogen oder zugeführt wird, so dass das Phasenwechselmaterial (PCM) zumindest teilweise eine Phasenänderung erfährt.

## Claims

1. A portable device (100 ; 200) for regulating the temperature of an element (1), said device comprising:
i) an engagement part (2) adapted to be placed in contact with the element (1), the engagement part (2) comprising a carafe (21) for decanting and aerating a liquid,
ii) a temperature regulation unit (3) comprising a thermoelectric module (4) having two sides (41, 42),
a first side (41) of said thermoelectric module being thermally coupled with the engagement part (2),
**characterised in that** the device (100 ; 200) further comprises:
iii) a reception part (5) adapted to removably receive a phase change material (PCM) (6),
a second side (42) of said thermoelectric module being thermally coupled with the reception part (5), such that the phase change material (PCM) (6) provided in said reception part will also be thermally coupled with said second side (42) of said thermoelectric module.

2. A device according to claim 1, **characterised in that** said engagement part (2) comprises a heat-transfer plate (25).

3. A device according to claim 1 or 2, **characterised in that** the carafe is a carafe (21) comprising a removable bell (22) and a base (23), said base being a heat transfer-plate (25).

4. A device according to any one of the preceding claims, **characterised in that** the engagement part (2), the temperature regulation unit (3) and the reception part (5) are integral with the device.

5. A device according to claim 4, **characterised in that** the entire device (200) is adapted to be tilted to pour a liquid from the device (200).

6. A device according to any one of the preceding claims, **characterised in that** the reception part (5) comprises a phase change material (PCM) (6) of predetermined mass.

7. A device according to claim 6, **characterised in that** said phase change material (PCM) (6) is provided in a removable container (61).

8. A device according to claim 7, **characterised in that** said phase change material (PCM) (6) is a material chosen from amongst the following materials: water, paraffin, salt hydrates, dry ice (carbon dioxide), disodium orthophosphate dodecahydrate, wax, or any combination of two or more of these materials.

9. A device according to any of claims 6 to 8, **characterised in that** during use the thermal energy provided to or extracted from the element (1) by the thermoelectric module is substantially respectively extracted from or supplied to the phase change material (PCM) (6).

10. A device according to any one of the preceding claims, **characterised in that** the temperature regulation unit (3) comprises a Peltier effect type of thermoelectric module (4).

11. A device according to any one of the preceding claims, **characterised in that** the module (4) is controlled by a processor (31) as a function of a selected temperature.

12. A device according to claim 11, **characterised in that** the module is further controlled by the processor (31) as a function of a recommended time period.

13. A device according to claim 12, **characterised in that** the temperature for a wine is selected according to the type of wine selected, the processor (31) being fed a temperature from a database connected to the processor (31) depending on the type of wine selected, and also a recommended aeration period for said type of wine.

14. A method for regulating the temperature of an element (1) using a portable device (100 ; 200) for regulating the temperature of an element (1) according to any one of the preceding claims, wherein the method comprises the following steps:
i) thermally coupling a first side (41) of a thermoelectric module (4) exhibiting a first thermal effect with the element (1),
ii) removably providing a phase change material (PCM) (6) of predetermined mass,
iii) thermally coupling a second side (42) of said thermoelectric module (4) exhibiting a second effect with the phase change material (PCM) (6),
such that the energy supplied to or extracted from the element (1) is extracted from or supplied to the latent heat of the phase change material (PCM) (6), such that the phase change material (PCM) undergoes, at least in part, a change of phase.
